# EUROPEAN PATENT SPECIFICATION

(11) **EP 1 724 986 B1**
(45) Date of publication and mention of the grant of the patent: **05.12.2007**
(21) Application number: 06009471.1
(22) Date of filing: 08.05.2006
(51) Int. Cl.: H04L 29/06, H04N 5/445

(54) **Client terminal device**
Client-Endgerät
Client terminal

(30) Priority: 16.05.2005 JP 2005142358
(43) Date of publication of application: 22.11.2006
(73) Proprietor: Funai Electric Co., Ltd., Daito-shi, Osaka 574-0013 (JP)
(72) Inventor: Hashimoto, Masahiro, c/o Funai Electric Co., Ltd., Daito-shi, Osaka 574-0013 (JP)
(74) Representative: Grünecker, Kinkeldey, Stockmair & Schwanhäusser Anwaltssozietät

(56) References cited:
- EP-A- 1 441 471
- WO-A-98/59282
- WO-A-02/091114
- ALLEN ET AL: "Overlapped Processing during a Display Save and Partial Display Save" IP.COM JOURNAL, IP.COM INC., WEST HENRIETTA, NY, US, 1 July 1992 (1992-07-01), XP013097162 ISSN: 1533-0001

## Description

### BACKGROUND OF THE INVENTION

### Field of the Invention

The present invention relates to a client terminal device.

### Description of the Related Art

In recent years, a system has been used, which transmits information (image information) from a server device to a client terminal device via a network. The server device is connected to a plurality of types of AV (audio visual) equipment, for example, a television set, a video recorder, a PVR (Personal Video Recorder), a tuner for BS (Broadcasting Satellite) or CS (Communication Satellite) broadcasting, an STB (Set Top Box) player, a DVD (Digital Versatile Disk) player and audio devices so that image information corresponding to AV equipments connected to the server device can be transferred from the server device and transmitted to the client terminal device.

International application WO98/59282 discloses a browser based command and control home network for commanding and controlling diverse home devices. Document D1 relates to the problem that a remote control unit can typically only be used to command and control those home devices that are within the signal range of the remote control unit. The system in document D1 is composed of several home devices that are interconnected by a serial bus. In order to solve the above problem, document D1 proposes to display user interface data on a first home device, wherein the user interface data belongs to the second home device to be controlled. The user may interact with the user interface displayed on the first device, and in response to the interaction, control and command information is sent from the first home device to the second home device in order to control the second device according to the user input. Therefore, since the user interface can be displayed from any device, a single control device may control a plurality of different devices.

The European patent application EP1441471 A2 relates to a remote control device, which controls various devices of home network environment through the use of a graphic user interface (GUI). The underlying problem in document D2 concerns the need for using several remote controllers in order to change the home device to another one. In order to solve this problem, the remote control device collects remote control service list information from the respective devices of the home network and stores the collected information in a storage unit. Subsequently, the remote control device provides a service to a certain device to enable the certain device to control the other home network devices through the GUI. Accordingly, on receiving from the certain device a request, a remote control command is read from the database server in accordance with the request, and the corresponding remote control command is transmitted to the corresponding device.

In this instance, a user of a client terminal device is able to transmit a command to the client terminal device by pressing, for example, an input button on a remote controller (hereinafter abbreviated as RC) for the client terminal device. Then, if the command is, for example, a command requesting the provision of image information, the command is transmitted from the client terminal device to a server device.

There may be a case where some time is needed to reflect a command on a client terminal device after a user presses an input button on an RC, depending on a type of the command.

For example, a method has been proposed in which a client terminal device stores all commands received from an RC, transmits a previously stored command to a server device to receive image information corresponding to the command from the server device and thereafter transmits a subsequently stored command to the server device (see JP 2004-265063A).

However, in the method disclosed in JP 2004-265063A, such problems are found that a user may have a misconception that no command has been received by a client terminal device and continuously press, for example, an input button on an RC in an unnecessary manner, resulting in a halt of a client terminal device, or a user may have an undesired result by the client terminal device which may take an unnecessary action in response to an unnecessary command. There is another problem that a user may have a misconception that no command has been received by the client terminal device and feel uneasy.

### SUMMARY OF THE INVENTION

It is one of objects of the present invention to provide a client terminal device capable of favorably eliminating unintended actions based on unnecessary commands by a user.

According to the invention, a client terminal device to transmit and receive information to and from a server device connected via a wireless network, comprises: a command receiving member to receive a first command transmitted from a remote controller; a command transmitting member to transmit the first command received from the command receiving member to the server device; a display control member to display image information transmitted from the server device on a display screen of a display device, the image information corresponding to the received first command transmitted by the command transmitting member; a determination member to determine whether image information displayed on the display screen of the display device has been changed or not to image information corresponding to the first command, based on whether a difference value between the image information displayed on the display at the time of receiving the first command and image information currently displayed on the display screen exceeds a predetermined value or not; and a command reception restricting member to prohibit the command receiving member from receiving a second command transmitted from the remote controller for the period from the time of receiving the first command transmitted from the remote controller to the time of the determination member judging that image information displayed on the display screen of the display device has been changed to image information corresponding to the first command.

By doing so, a determination member is able to determine whether image information displayed on a display screen of a display device have been changed or not based on whether a difference value of the image information displayed on the display screen of the display device has exceeded a predetermined value or not, and a command reception restricting member is also able to prohibit a command receiving member from receiving commands transmitted from a remote controller for the period from the time when a first command transmitted from the remote controller is received to the time when image information displayed on the display screen of the display device are determined by the determination member to have been changed. Therefore, the command received by the command receiving member subsequent to the first command is to be a command transmitted from the remote controller after confirmation by a user that image information corresponding to the first command have been displayed on the display screen of the display device, thereby making it possible to favorably eliminate unintended actions based on unnecessary commands by the user.

Preferably, the client terminal device of the second aspect further comprises: a judgment member to judge whether time passed after reception of the first command transmitted from the remote controller exceeds a predetermined time or not, wherein the command reception restricting member cancels the prohibition on the command receiving member from receiving a command transmitted from the remote controller when the judgment member judges that time passed after reception of the first command transmitted from the remote controller has exceeded the predetermined time.

By doing so, not only can the effect similar to that of the invention described in Claim 2 be obtained, but also a judgment member is able to make a judgment whether time passed after reception of a first command transmitted from a remote controller has exceeded a predetermined time or not, and a command reception restricting member is able to cancel a prohibition on a command receiving member from receiving the command transmitted from the remote controller when the judgment member judges that time passed after reception of the first command transmitted from the remote controller exceeds a predetermined time. More specifically, for example, in a case where unfavorable information communications between a client terminal device and a server device may lead to a failure in changing image information displayed on a display screen of a display device to image information corresponding to the first command, prohibition on reception of the command is canceled after passage of a predetermined time. It is, therefore, possible to eliminate anxiety that a user may have due to a failure in changing the image information displayed on the display screen of the display device, namely, the anxiety that the client terminal device or the server device may have been broken.

Preferably, the client terminal device of the second aspect further comprises: a notification member to notify the prohibition while reception of the command is prohibited by the command reception restricting member.

By doing so, not only can the effect similar to that of the invention described in Claim 2 or Claim 3 be obtained, but also while a command reception restricting member prohibits a command receiving member from receiving a command, a notification member is able to notify the fact. Therefore, it is possible to eliminate anxiety that no command may have been transmitted to a client terminal device.

### BRIEF DESCRIPTION OF THE DRAWINGS

The present invention will become more fully understood from the detailed description given hereinbelow and the appended drawings which given by way of illustration only, and thus are not intended as a definition of the limits of the present invention, and wherein;
FIG. 1 is a view illustrating an entire constitution of a client server device in an embodiment of the present invention;
FIG. 2 is a block diagram illustrating a functional constitution of a server device in an embodiment of the present invention;
FIG. 3 is a block diagram illustrating a functional constitution of a client terminal device in an embodiment of the present invention; and
FIG. 4 is a flowchart for explaining a processing for restricting the reception of commands from an RC on the client terminal device.

### DETAILED DESCRIPTION OF THE INVENTION

Hereinafter, a detailed explanation will be made for the best mode for carrying out the present invention by referring to drawings. It is noted that the scope of the invention is not limited to the illustrated examples.

### <Constitution>

First, an explanation will be made for constitutions of a client server device, a server device and a client terminal device.

### [Constitution of client server device]

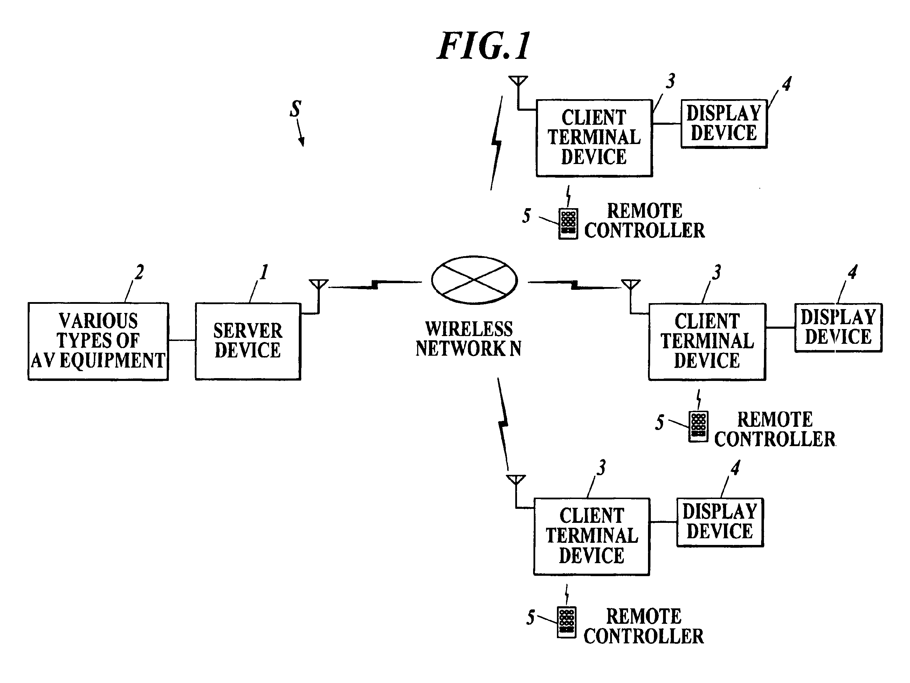

As illustrated in FIG. 1, a client server device S is, for example, comprises a server device 1 connected to various types of AV equipment 2, a plurality of client terminal devices 3 connected to a display device 4 and operable by a remote controller 5 (hereinafter, abbreviated as RC 5), etc. The server device 1 is connected to the client terminal device 3 via a wireless network N, so as to attain mutual information communications.

Further, the number of the client terminal devices 3 connected to the server device 1 is not limited to that given in FIG. 1.

Information transmitted from the client terminal device 3 to the server device 1 includes, for example, commands. More specifically, the commands are transmitted to the client terminal device 3 from an RC 5 upon pressing of an input button on the RC 5 by a user and then transmitted to the server device 1 from the client terminal device 3. The commands include, for example, a command to the server device 1 (such as a command for requesting disconnection with various types of AV equipment 2) and a command to various types of AV equipment 2 (such as a command for requesting menu selection and that for requesting transmission of images).

Information transmitted from the server device 1 to the client terminal device 3 includes, for example, image information. The image information are obtained from various types of AV equipment 2 connected to the server device 1, for example, and displayed on a display screen of a display device 4 connected to the client terminal device 3. The image information includes, for example, static image information such as menu images and dynamic image information such as screen images.

More specifically, when the client terminal device 3 is directed to display image information desired by a user on the display screen of the display device 4 on the basis of a command to various types of AV equipment 2 transmitted from an RC 5, the command is transmitted to the server device 1. The server device 1 which has received the command obtains image information corresponding to the command and desired by a user from various types of AV equipment 2, thereby transmitting them to the client terminal device 3. Then, the client terminal device 3 displays the received image information on the display screen of the display device 4.

The wireless network N is a network such as a radio LAN (Local Area Network) according to the BLUETOOTH Standard and IEEE (Institute of Electrical and Electronic Engineers) Standard of 802.11.

### [Constitution of server device]

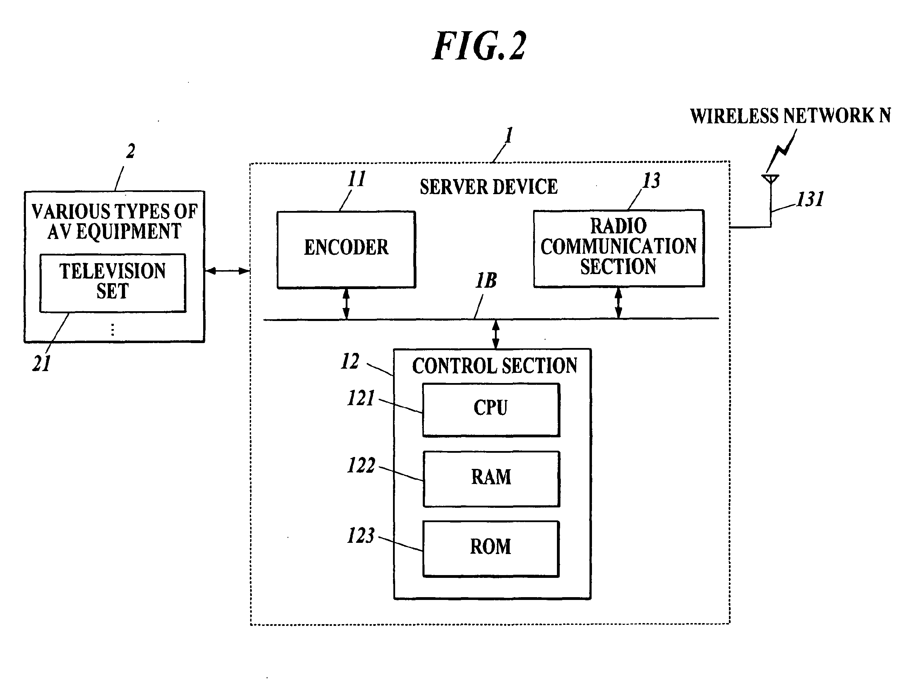

As illustrated in FIG. 2, the server device 1 comprises, for example, an encoder 11, a control section 12, a radio communication section 13, etc., each of which is connected via a bass 1B. Then, the server device 1 is connected to various types of AV equipment 2.

The encoder 11 is to encode, for example, image information inputted from the various types of AV equipment 2 to the server device 1 and store them as compressed image information in a predetermined file format. More specifically, the encoder 11 encodes static image information selected from image information inputted from various types of AV equipment 2 to the server device 1 and stores them as compressed image information in JPEG (Joint Photographic Experts Group) format, etc., and also encodes dynamic image information selected from image information and stores them as compressed image information in MPEG-2 (Moving Picture Experts Group phase 2) format, etc.

As illustrated in FIG. 2, the control section 12 is provided, for example, with a CPU (Central Processing Unit) 121, a RAM (Random Access Memory) 122, a ROM (Read Only Memory) 123, etc.

The CPU 121 is to perform various controls according to various processing programs for the server device 1 stored in the ROM 123.

The RAM 122 is provided with a program storing domain for developing processing programs executed by the CPU 121 and a information storing domain for storing processing results obtained upon execution of input information and the above-described processing programs.

The ROM 123 is to store system programs executed by the server device 1, various processing programs executed by the system programs, information used for execution of the various processing programs and information of the processing results calculated by the CPU 121. Further, these programs are stored in the ROM 123 in the form of program code readable by a computer.

A radio communication section 13 is to transmit and receive various types of information with the client terminal devices 3 via the wireless network N. More specifically, the radio communication section 13 is provided with an antenna 131 and an RF (Radio Frequency) converter (not illustrated) for transmitting and receiving radio signals with the client terminal devices 3 and a wireless LAN card (not illustrated) for connecting to a wireless LAN according to the BLUETOOTH standard and IEEE standard of 802.11.

More specifically, the radio communication section 13 of the present invention is, for example, to receive a command transmitted from a radio communication section 32 (to be described later) of a client terminal device 3 and transmit image information corresponding to the command to the radio communication section 32 (to be described later) of the client terminal device 3.

As illustrated in FIG. 2, various types of AV equipment 2 connected to a server device 1 include, for example, a television set 21, etc. The AV equipment 2 actuates in compliance with a control given from a control section 12 of the server device 1. Then, the AV equipment 2 outputs, for example, image information to the server device 1 in compliance with the control.

Further, the various types of AV equipment 2 include any favorable AV equipment such as a video recorder, a PVR (Personal Video Recorder), a tuner for BS (Broadcasting Satellite) or CS (Communication Satellite) broadcasting, an STB (Set Top Box), a DVD (Digital Versatile Disk) player, and audio devices, in addition to the television set 21 illustrated in FIG. 2.

### [Constitution of client terminal device]

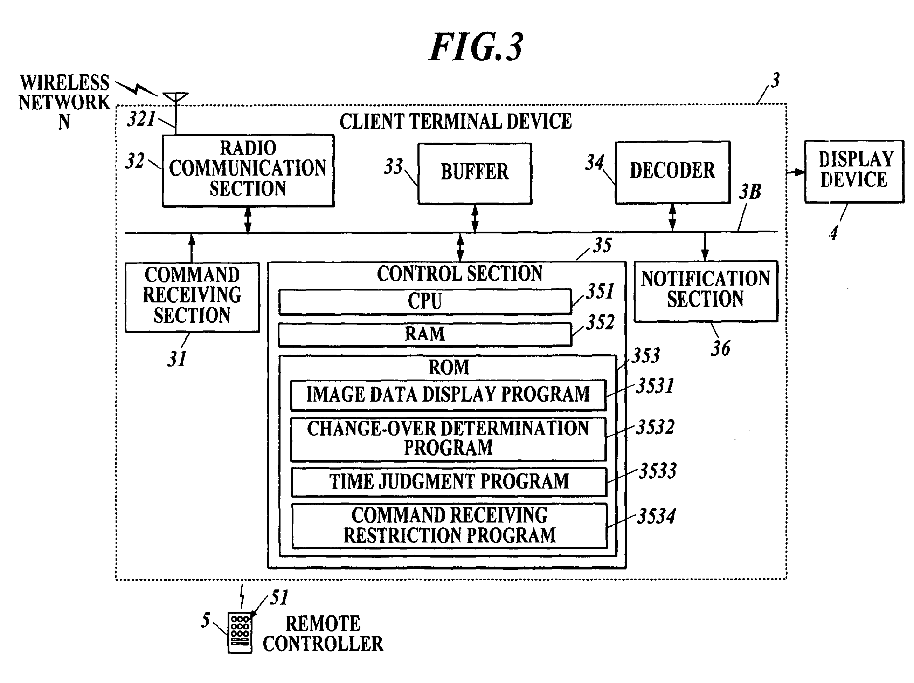

As illustrated in FIG. 3, the client terminal device 3 is constituted, for example, by a command receiving section 31 as command receiving member, a radio communication section 32, a buffer 33, a decoder 34, a control section 35 as command transmitting member , and a notification section 36 as notification member. Each of these sections is connected via a bass 3B. Then, the client terminal device 3 is connected to a display device 4 and operated by using an RC 5.

The command receiving section 31 is to receive, for example, a command transmitted from the RC 5 as command receiving member.

The radio communication section 32 is substantially similar in constitution to the radio communication section 13 of the server device 1 and to transmit and receive various information with the server device 1 via the wireless network N. More specifically, the radio communication section 32 is provided with an antenna 321 and an RF (Radio Frequency) converter (not illustrated) for transmitting and receiving radio signals with the client terminal device 1 and a wireless LAN card (not illustrated) for connecting to a wireless LAN according to the BLUETOOTH standard and IEEE standard of 802.11.

More specifically, the radio communication section 32 of the present invention is to transmit, for example, a command received from a command receiving section 31 to the radio communication section 13 of the server device 1 as command transmitting member. Further, the radio communication section 32 of the present invention is to receive, for example, image information (compressed image information) transmitted from the radio communication section 13 of the server device 1.

The buffer 33 is to temporarily store image information (compressed image information) transmitted from the radio communication section 13 of the server device 1 and corresponding to the command transmitted from the radio communication section 32.

The decoder 34 is to provide a processing to compressed image information stored in the buffer 33 according to a file format of the compressed image information, thereby decoding the compressed image information into image information.

The control section 35 is provided, for example, with a CPU 351, a RAM 352, a ROM 353 and a clock section (not illustrated), as illustrated in FIG. 3.

The CPU 351 is to perform various controls according to various processing programs for the client terminal device 3 stored in the ROM 353.

The RAM 352 is provided with a program storing domain for developing processing programs executed by the CPU 351 and a information storing domain for storing processing results obtained on execution of input information and the above-described processing programs.

In this instance, the RAM 352 of the present invention is provided, for example, with a flag storing domain (not illustrated). A flag stored in the flag storing domain (not illustrated) is changed from "0" to "1" or "1" to "0", when the CPU 351 executes a command receiving restriction program 3534 (to be described later) stored in the ROM 353. It is noted that the flag is initially set to "0".

The ROM 353 is to store system programs executed by the server device 3, various processing programs executed by the system programs, information used for execution of the various processing programs and information of the processing results calculated by the CPU 351. It is noted that these programs are stored in the ROM 353 in the form of program code readable by a computer.

More specifically, the ROM 353 stores, for example, an image information display program 3531, a change-over determination program 3532, a time judgment program 3533, a command receiving restriction program 3534, etc., as illustrated in FIG. 3.

The image information display program 3531 is to provide the CPU 351 with a function which displays, on the display screen of the display device 4, image information corresponding to a command transmitted from the radio communication section 13 of the server device 1 and transmitted by the radio communication section 32.

More specifically, when the radio communication section 32 receives image information (compressed image information) corresponding to a command received from the radio communication section 13 of the server device 1 and the CPU 351 allows the buffer 33 to store the received compressed image information, the CPU 351 executes the image information display program 3431 to decode the stored compressed image information into image information by using the decoder 34, thereby making it possible to display the image information on the display screen of the display device 4.

The CPU 351 executes the image information display program 3531 to function as a display restriction means.

The change-over determination program 3532 is to provide the CPU 351 with a function which determines whether image information displayed on a display screen of a display device 4 have been changed or not, based on whether a difference value of image information displayed on the display screen of the display device 4 has exceeded a predetermined value or not.

More specifically, menu images of various types of AV equipment 2, as static image information, are to be displayed in advance on a display screen of a display device 4 as image information. Then, when the command receiving section 31 receives a first command (for example, a command to menu selection) transmitted from an RC5, the CPU 351 executes the change-over judgment program 3532 to judge whether image information displayed on the display screen of the display device 4 have been changed to image information corresponding to the first command or not, on the basis of menu images displayed on the display screen of the display device 4 at the time of receiving a command to the menu selection and a fact that a difference value of image information corresponding to a command in response to the menu selection displayed subsequently on the display screen of the display device 4 exceeds a predetermined value or not.

The CPU 351 executes the change-over determination program 3532 to function as a judgment member.

The time judgment program 3533 is to provide the CPU 351 with a function which judges whether time passed after reception of a first command transmitted from an RC 5 exceeds a predetermined time or not.

More specifically, when a command receiving section 31 receives the first command transmitted from the RC 5, the CPU 351 executes the time judgment program 3533 to allow a clock section (not illustrated) to start to measure time, thereby making a judgment whether a measured time has exceeded a predetermined time or not.

The CPU 351 executes the time judgment program 3533 to function as a judgment member.

The command receiving restriction program 3534 is to provide the CPU 351 with a function which prohibits a command receiving section 31 from receiving a command transmitted from the RC 5 for the period from the time when a first command transmitted from the RC 5 is received to the time when image information displayed on a display screen of a display device 4 is determined to have been changed by execution of the change-over determination program 3532 of the CPU 351. The program is also to provide the CPU 351 with a function which cancels a prohibition on the command receiving section 31 from receiving the command transmitted from the RC 5, when time passed after reception of the first command transmitted from the RC 5 is judged to have exceeded a predetermined time by execution of the time judgment program 3535 by the CPU 351. Further, the program is to provide the CPU 351 with a function which notifies prohibited reception of the command by a notification section 36.

More specifically, when the command receiving section 31 receives a first command transmitted from the RC 5, the CPU 351 executes the command receiving restriction program 3534, changing at first a flag stored in a flag storing domain (not illustrated) of the RAM 532 from "0" to "1" and also prohibiting the command receiving section 31 from receiving the command transmitted from the RC 5. Then, when image information displayed on a display screen of a display device 4 are determined to have been changed to image information corresponding to the first command through execution of a change-over determination program 3532 by the CPU 351 or time (measured time) measured by a clock section (not illustrated) and passed after reception of the first command transmitted from the RC 5 is judged to have exceeded a predetermined time through execution of a time judgment program 3533 by the CPU 351, the CPU 351 executes the command receiving restriction program 3534 to cancel a prohibition on the command receiving section 31 from receiving the command transmitted from the RC 5 and changes the flag stored in the flag storing domain (not illustrated) of the RAM 352 from "1" to "0". Further, while reception of the command transmitted from the RC 5 is prohibited by the command receiving section 31, the CPU 351 executes the command receiving restriction program 3534 to notify the fact by using the notification section 36.

The CPU 351 executes the command receiving restriction program 3534 to function as a command reception restricting member and a notification member.

More specifically, while the CPU 351 executes the command receiving restriction program 3534 to prohibit the command receiving section 31 from receiving the command transmitted from the RC 5, a flag stored in the flag storing domain (not illustrated) of the RAM 352 is "1".

While the CPU 351 which has executed a command receiving restriction program 3534 prohibits the command receiving section 31 from receiving the command transmitted from the RC 5, the notification section 36 is to notify, as a notification member, the fact in compliance with control of the CPU 351 which has executed the command receiving restriction program 3534. More specifically, the notification section 36 is an LED (Light Emitting Diode), etc., and lit while reception of the command is prohibited.

The display device 4 is to display image information inputted from a client terminal device 3 on a display screen, for example, in compliance with a control of the CPU 351 which has executed the image information display program 3531.

The RC 5 is provided, for example, with various input buttons 51, as illustrated in FIG. 3. For example, upon pressing of any of these input buttons 51, the RC 5 transmits a command corresponding to the input button to a command receiving section 31 of a client terminal device 3. <Command-reception restricting process>

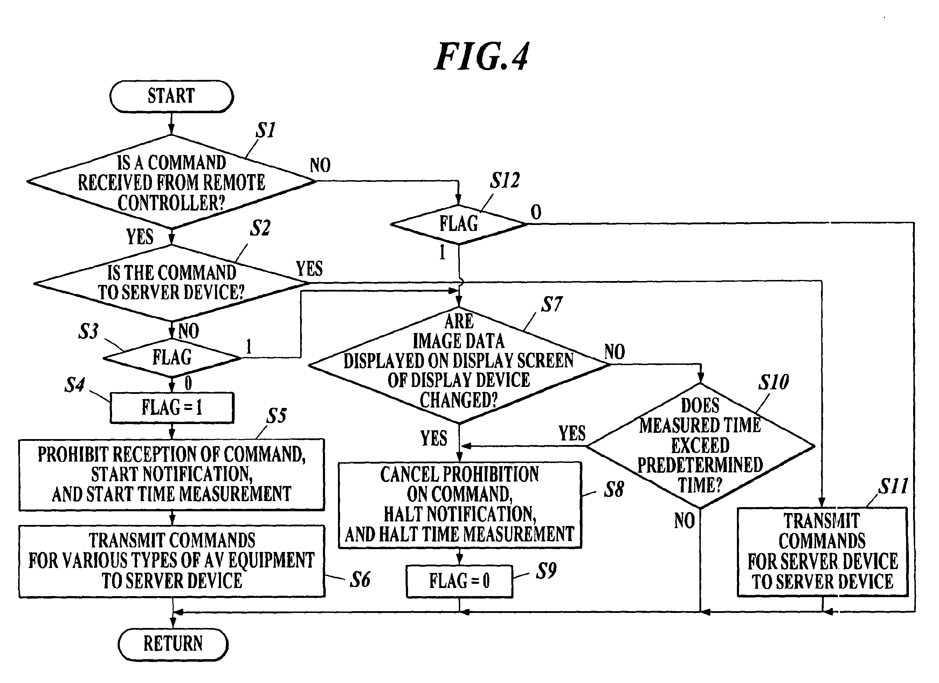

Next, an explanation will be made for a process for restricting the reception of commands from an RC 5 by a client terminal device 3 with reference to the flowchart given in FIG. 4.

In this instance, for example, menu images of various types of AV equipment 2 are to be displayed in advance on a display screen of a display device 4 as image information.

The CPU 351 of the client terminal device 3 judges at first whether a command receiving section 31 has received a command transmitted from an RC 5 or not (Step S1).

When the command receiving section 31 is judged to have received the command transmitted from the RC 5 at the Step S1 (Step S1; Yes), the CPU 351 judges whether the command received at the Step S1 is a command to the server device 1 or not (Step S2).

When the command received at the Step S1 is judged not to be a command to the server device 1 at the Step S2 (Step S2; No), namely, the command received at the Step S1 is judged to be a command to various types of AV equipment 2 (such as a command to menu selection), the CPU 351 judges whether a flag stored in a RAM 352 is "0" or "1" (Step S3).

When the flag is judged to be "0" at the Step S3 (Step S3; 0), the CPU 351 executes a command receiving restriction program 3534 to change the flag to "1" (Step S4).

Next, the CPU 351 executes the command receiving restriction program 3534 to prohibit the command receiving section 31 from receiving the command transmitted from the RC 5, thereby allowing a notification section 36 to start notification. It also executes a time judgment program 3533 to measure time by a clock section (not illustrated) (Step S5).

Next, the CPU 351 transmits commands corresponding to various types of AV equipment 2 which have been received at the Step S1 to the server device 1, and the process returns to the Step S1 (Step S6).

In contrast, when the flag is judged to be "1" at the Step S3 (Step S3; 1), the CPU 351 executes a change-over determination program 3532 to judge whether image information displayed on a display screen of a display device 4 have been changed or not (Step S7).

When image information displayed on the display screen of the display device 4 are judged to have been changed at the Step S7 (Step S7; Yes), the CPU 351 executes the command receiving restriction program 3534 to cancel a prohibition on the command receiving section 31 from receiving the command transmitted from the RC 5 started at the Step S5, thereby allowing the notification section 36 to halt notification and also allowing the clock section (not illustrated) to halt time measurement (Step S8).

Then, the CPU 351 executes the command receiving restriction program 3534 to change the flag stored in the RAM 352 from "1" to "0" (Step S9), and the process returns to the Step S1.

In contrast, when image information displayed on the display screen of the display device 4 are judged not to have been changed at the Step S7 (Step S7; No), the CPU 351 executes the time judgment program 3533 to judge whether time measured by the clock section (not illustrated) started at the Step S5 (measured time) has exceeded a predetermined time or not (Step S10).

When the measured time is judged to have exceeded a predetermined time at the Step S10 (Step S10; Yes), the CPU 351 proceeds the process to the Step S8.

In contrast, when the measured time is judged not to have exceeded a predetermined time at the Step S10 (Step S10; No), the CPU 351 returns the process to the Step S1.

When the command received at the Step S1 is judged to be a command to the server device 1 at the Step S2 (Step S2; Yes), the CPU 351 transmits the command to the server device 1 received at the Step S1 to the server device 1 (Step S11), and the process returns to the Step S1.

In contrast, when the command receiving section 31 is judged not to have received the command transmitted from the RC 5 at the Step S1 (Step S1; No), the CPU 351 judges whether the flag stored in the RAM 352 is "0" or "1" (Step S12).

When the flag is judged to be "1" at the Step S12 (Step S12; 1), the CPU 351 proceeds the process to the Step S7.

In contrast, when the flag is judged to be "0" at the Step S12 (Step S12; 0), the CPU 351 returns the process to the Step S1.

According to the client terminal device 3 of the present invention explained above, the command receiving section 31 is used to receive a command transmitted from the RC 5, the radio communication section 32 is used to transmit a command received from the command receiving section 31 to the server device 1, and the CPU 351 executes image information display program 3531, thereby making it possible to display the image information corresponding to the command received from the server device 1 and transmitted by the wireless communication section 32 on the display screen of the display device 4. Then, the CPU 351 executes the change-over determination program 3532, thereby making it possible to judge whether the image information displayed on the display screen of the display device 4 have been changed or not based on whether a difference value of image information displayed on the display screen of the display device 4 has exceeded a predetermined value or not. The CPU 351 also executes the command receiving restriction program 3534, thereby making it possible to prohibit the command receiving section 31 from receiving a command transmitted from the RC 5 for the period from the time when a first command transmitted from the RC 5 is received to the time when image information displayed on the display screen of the display device 4 are judged to have been changed through execution of the change-over judgment program 3532 by the CPU 351.

Therefore, a command received by the command receiving member 31 subsequent to the first command is to be a command transmitted from an RC 5 after confirmation by a user that image information corresponding to the first command have been displayed on the display screen of the display device 4, thereby making it possible to favorably eliminate unintended actions based on unnecessary commands by the user.

The CPU 351 executes the change-over judgment program 3532, thereby making it possible to judge whether time passed after reception of a first command transmitted from an RC 5 has exceeded a predetermined time or not. Further, the CPU 351 executes the command receiving restriction program 3534, thereby making it possible to cancel a prohibition on the command receiving section 31 from receiving the command transmitted from the RC 5, when time passed after reception of the first command transmitted from the RC 5 exceeds a predetermined time through execution of the change-over judgment program 3532 by the CPU 351.

More specifically, for example, in the case where unfavorable information communications between a client terminal device 3 and a server device 1 may lead to a failure in changing image information displayed on a display screen of a display device 4 to image information corresponding to the first command, prohibition on reception of the command is canceled after passage of a predetermined time. It is, therefore, possible to eliminate anxiety that a user may have due to a failure in changing the image information displayed on the display screen of the display device 4, namely, anxiety that the client terminal device 3 or the server device 1 may have been broken.

Further, while the CPU 351 which has executed the command receiving restriction program 3534 prohibits the command receiving section 31 from receiving the command transmitted from the RC 5, a notification member 36 is able to notify the fact.

Therefore, it is possible to eliminate a user's anxiety that no command may have been transmitted to the client terminal device 3.

In addition, for example, as illustrated at the Step S2 of FIG. 4, the CPU 351 is able to judge whether a first command transmitted from an RC 5 is a command to the server device 1 or to various types of AV equipment 2. Then, when the first command transmitted from the RC 5 is judged to be a command to the server device 1, the CPU 351 is able to immediately transmit the first command from the radio communication section 32 to the radio communication section 13 of the server device 1.

Namely, since a response corresponding to a command to the server device 1 is faster than that to a command to various types of AV equipment 2, the CPU 351 has no need to restrict command receiving through execution of the command receiving restriction program 3534 in a case where the first command transmitted from the RC 5 is a command to the server device 1. In other words, the client terminal device 3 judges a speed of the response corresponding to the command, thereby making it possible to effectively restrict command receiving.

It is noted that the present invention is not limited to the embodiments explained above but may be modified, whenever necessary, within the scope which does not deviate from a sprit of the invention.

For example, the server device 1 may be connected to any favorable equipment capable of providing image information to the client terminal device 3, in addition to various types of AV equipment 2. Further, the image information are provided not only from various types of AV equipment 2 connected to the server device 1 but also may be stored in the ROM 123 of the server device 1.

Further, there is no particular limitation on a method of notification by a notification section 36, as long as it is able to notify a user of a fact that reception of a command transmitted from an RC 5 is prohibited. More specifically, not only an LED is lit while reception of the command is prohibited, as described in the above embodiments, but also, such a method may be employed that a user is notified of a fact that prohibition on reception of operational signals is soon canceled when a LED blinks at shorter intervals. There may be another method in which, for example, 7-segment LEDs arrayed so as to display numbers or LEDs available in a plurality of colors are used to count the numbers from the time when reception of operational signals is prohibited to the time when such a prohibition is canceled, thereby notifying a user of a fact that the prohibition is to be canceled soon.

Further, the notification section 36 may provide, for example, a notification by using sounds other than the notification by using a display. More specifically, if an operational signal is inputted while reception of the operational signal is prohibited, a user may be notified of invalidity by using sounds.

## Claims

1. A client terminal device (3) to transmit and receive information to and from a server device (1) connected via a wireless network (N),
the client terminal device comprising:
a command receiving member (31) to receive a first command transmitted from a remote controller(5);
a command transmitting member (32) to transmit the first command received from the command receiving member to the server device;
a display control member (3531) to display image information transmitted from the server device on a display screen of a display device (4), the image information corresponding to the received first command transmitted by the command transmitting member;
**characterized by**
a determination member (3532) to determine whether image information displayed on the display screen of the display device has been changed or not to image information corresponding to the first command, based on whether a difference value between the image information displayed on the display at the time of receiving the first command and image information currently displayed on the display screen exceeds a predetermined value or not; and
a command reception restricting member (3534) to prohibit the command receiving member from receiving a second command transmitted from the remote controller for the period from the time of receiving the first command transmitted from the remote controller to the time of the determination member judging that image information displayed on the display screen of the display device has been changed to image information corresponding to the first command.

2. The client terminal device as claimed in claim 1, further comprising:
a judgment member (3533) to judge whether time passed after reception of the first command transmitted from the remote controller exceeds a predetermined time or not,
wherein the command reception restricting member cancels the prohibition on the command receiving member from receiving the second command transmitted from the remote controller when the judgment member judges that time passed after reception of the first command transmitted from the remote controller has exceeded the predetermined time.

3. The client terminal device as claimed in claim 1 or 2, further comprising:
a notification member (36) to notify the prohibition while reception of the second command is prohibited by the command reception restricting member.

## Patentansprüche

1. Ein Client-Endgerät (3) um Informationen an und von einem Servergerät (1) zu übertragen und zu empfangen, das mittels einem drahtlosen Netzwerk (N) verbunden ist,
wobei das Client-Endgerät umfasst:
ein Befehlempfangselement (31) um einen ersten Befehl zu empfangen, der von einer Fernbedienung (5) übertragen wird;
ein Befehlübertragungselement (32) um den ersten Befehl, der von dem Befehlempfangselement empfangen wurde, an das Servergerät zu übertragen;
ein Bildschirmsteuerelement (3531) um Bildinformationen, die von dem Servergerät übertragen wurden, auf einen Bildschirm eines Bildschirmgerätes (4) darzustellen, wobei die Bildinformation dem empfangenen ersten Befehl entspricht, der durch das Befehlübertragungselement übertragen wurde;
**gekennzeichnet durch**
ein Bestimmungselement (3532) um zu bestimmen, ob Bildinformation, die auf dem Bildschirm des Bildschirmgerätes dargestellt wird, sich gewandelt hat oder nicht in Bildinformation, die dem ersten Befehl entspricht, basierend darauf, ob ein Differenzwert zwischen der Bildinformation, die auf dem Bildschirm dargestellt wird, zu dem Zeitpunkt in welchem der erste Befehl empfangen wird, und der Bildinformation, die im Augenblick auf dem Bildschirm angezeigt wird, einen vorbestimmten Wert überschreitet oder nicht; und
ein Befehlempfangbeschränkungselement (3534) um zu verhindern, dass das Befehlempfangselement einen zweiten Befehl empfängt, der von der Fernbedienung übertragen wird, für die Dauer von dem Zeitpunkt in dem der erste Befehl empfangen wird, der von der Fernbedienung übertragen wird, bis zu dem Zeitpunkt in dem das Bestimmungselement entscheidet, dass Bildinformation, die auf dem Bildschirm des Bildschirmgerätes angezeigt wird, sich in Bildinformation gewandelt hat, die dem ersten Befehl entspricht.

2. Das Client-Endgerät wie in Anspruch 1 beansprucht, weiterhin umfassend:
ein Entscheidungselement (3533) um zu entscheiden, ob Zeit, die nach Empfang des ersten Befehls, der von der Fernbedienung übertragen wurde, abgelaufen ist, eine vorbestimmte Zeit überschreitet oder nicht,
wobei das Befehlempfangbeschränkungselement die Verhinderung des Befehlempfangselements zum Empfangen des zweiten Befehls, der von der Fernbedienung übertragen wird, aufhebt, wenn das Entscheidungselement beurteilt, dass Zeit, die nach dem Empfang des ersten Befehls, der von der Fernbedienung übertragen wurde, abgelaufen ist, die vorbestimmte Zeit überschritten hat.

3. Das Client-Endgerät wie in Anspruch 1 oder 2 beansprucht, weiterhin umfassend:
ein Benachrichtigungselement (36) um, während der Empfang des zweiten Befehls durch das Befehlsempfangsbeschränkungselement verhindert wird, die Verhinderung mitzuteilen.

## Revendications

1. Dispositif de terminal client (3) pour transmettre des informations à un dispositif serveur (1) connecté via un réseau sans fil (N) et recevoir des informations en provenance de celui-ci,
le dispositif de terminal client comportant :
un élément de réception d'instruction (31) pour recevoir une première instruction transmise par un contrôleur distant (5) ;
un élément de transmission d'instruction (32) pour transmettre la première instruction reçue en provenance de l'élément de réception d'instruction au dispositif de serveur ;
un élément de commande d'affichage (3531) pour afficher des informations d'image transmises par le dispositif de serveur sur un écran d'affichage d'un dispositif d'affichage (4), les informations d'image correspondant à la première instruction reçue transmise par l'élément de transmission d'instruction ;
**caractérisé par**
un élément de détermination (3532) pour déterminer si oui ou non des informations d'image affichées sur l'écran d'affichage du dispositif d'affichage ont été changées en informations d'image correspondant à la première instruction, selon qu'une valeur de différence entre les informations d'image affichées sur l'afficheur au moment de la réception de la première instruction et les informations d'image actuellement affichées sur l'écran d'affichage dépasse ou non une valeur prédéterminée; et
un élément de restriction de réception d'instruction (3534) pour empêcher l'élément de réception d'instruction de recevoir une seconde instruction transmise par le contrôleur distant pendant la période allant du moment de réception de la première instruction transmise par le contrôleur distant jusqu'au moment où l'élément de détermination détermine que des informations d'image affichées sur l'écran d'affichage du dispositif d'affichage ont été changées en informations d'image correspondant à la première instruction.

2. Dispositif de terminal client selon la revendication 1, comportant en outre :
un élément de jugement (3533) pour juger si oui ou non la durée écoulée après la réception de la première instruction transmise par le contrôleur distant dépasse une durée prédéterminée,
dans lequel l'élément de restriction de réception d'instruction annule l'empêchement visant à empêcher l'élément de réception d'instruction de recevoir la seconde instruction transmise par le contrôleur distant lorsque l'élément de jugement juge que la durée écoulée après la réception de la première instruction transmise par le contrôleur distant a dépassé la durée prédéterminée.

3. Dispositif de terminal client selon la revendication 1 ou 2, comportant en outre :
un élément de notification (36) pour notifier l'empêchement alors que la réception de la seconde instruction est empêchée par l'élément de restriction de réception d'instruction.
